# EUROPEAN PATENT APPLICATION

(11) **EP 1 178 656 A1**
(43) Date of publication of application: **06.02.2002**
(21) Application number: 00650093.8
(22) Date of filing: 02.08.2000
(51) Int. Cl.: H04M 3/493, H04L 12/66, G10L 15/26

(54) **System and method for computerless surfing of an information network**

(71) Applicant: Passcall Advanced Technologies Ltd, Tirat Hacarmel (IL)
(72) Inventor: Pappo, Nicky, Haifa (IL)
(74) Representative: Coyle, Philip Aidan

(57) **Abstract**

Apparatus for providing computerless surfing of an information network. The apparatus includes a telephone connection allowing an individual caller from among a population of subscribers to make an incoming call to the central apparatus, a menu selection acceptor operative to accept at least one menu selection from the individual caller, a server connecting the incoming call to an information network and surfing the information network responsive to the caller's menu selections, to access textual information of interest to the caller, and a text-to-speech converter operative to convert the textual information of interest to the caller into speech output and to feed the speech output over the telephone connection to the individual caller.

## Description

### FIELD OF THE INVENTION

The present invention relates to apparatus and methods for surfing the Internet and other sources of data.

### BACKGROUND OF THE INVENTION

Conventional Internet surfing is performed via a computer. However, not every household and small business is equipped with a computer. Furthermore, a computer is not always available even to persons who own a computer, because the user is at a location remote from his or her computer, or because the computer is being used for other purposes or by other individuals. For example, a mobile user is often away from his home computer for many hours of the day. Also, a family that includes several computer-literate members, often owns only a single computer. People often without access to a computer include the drivers and passengers of cars or alternative modes of transport, and the blind. However, all these categories of individuals without access to computers, typically have access to a telephone.

The Trilogue voice mail system is available from Efrat Future Technologies Ltd., 23 Habarzel Street, Tel Aviv, 69710, Israel; www.efrat.co.il.

Microsoft Operating System Windows NT version 4.0, and Microsoft Speech SDK 4.0 Beta-2 text to speech converter are available from Microsoft, 1 Microsoft Way, Redmond, WA 98052-6399, U.S.A.; www.microsoft.com.

The Dialogic d21/d, is available from Dialogic World Headquarters, 1515 Route Ten, Parsippany, NJ 07054, U.S.A.; www.dialogic.com.

Parity Software's VOS Version 6.0 is available from Parity Software, 2313 Balboa Road, Austin TX 78733, U.S.A.; www.parity.com.

An example of a Global Positioning Service (GPS) product is Crosscheck, available from Trimble, 645 North Mary Avenue, Sunnyvale, CA 94086, U.S.A.; www.trimble.com.

An example of a smart phone, a device integrating a telephone and a computer, is the Nokia 9000, produced by Nokia, Keilalahdentie 4, FIN-02150 Espoo, P.O. Box 226, FIN-00045 NOKIA GROUP, Finland; www.nokia.com.

An example of an Optical Character Recognition (OCR) system is Caere Devkit 2000, produced by Caere Corp., 100 Cooper Court, Los Gatos, CA 95032, USA; www.caere.com.

Teletext information services are known. Teletextual information is encoded in the video signal from the various video channels. It is not, however, visible in the normal video signal, and special hardware, such as a video card, available in most television sets, is used to extract this information onto the television screen. Teletext information is menu driven, and contains a range of information including weather reports, travel information, business data etc.

An example of a video card capable of extracting Teletext information from a video signal is the DPCT 7146, produced by Philips, Eindhoven, The Netherlands; www.philips.com.

An example of a sound card capable of digitizing radio signals is the Soundblaster PCI128, produced by Creative Technology Ltd., 31 International Business Park, Creative Resource, Singapore 609921, Republic of Singapore.

An example of an Internet chat "room" is mIRC Version 5.5 at the web site www.mirc.com.

### SUMMARY OF THE INVENTION

The present invention seeks to provide a system and method for computerless surfing of an information network such as the Internet.

There is thus provided in accordance with a preferred embodiment of the present invention central apparatus for providing computerless surfing of an information network, the apparatus including a telephone connection allowing an individual caller from among a population of subscribers to make an incoming call to the central apparatus, a menu selection acceptor operative to accept at least one menu selection from the individual caller, a server connecting the incoming call to an information network and surfing the information network responsive to the caller's menu selections, to access textual information of interest to the caller, and a text-to-speech converter operative to convert the textual information of interest to the caller into speech output and to feed the speech output over the telephone connection to the individual caller.

Further in accordance with a preferred embodiment of the present invention, the at least one menu selections includes a hierarchy of menu/submenu selections.

Still further in accordance with a preferred embodiment of the present invention, the menu selection acceptor is operative to accept an oral menu selection.

Additionally in accordance with a preferred embodiment of the present invention, the menu selection acceptor is operative to accept a keyed-in menu selection.

Further in accordance with a preferred embodiment of the present invention, the apparatus also includes a caller prompter operative to prompt the caller to present at least one menu selections which are understandable to the menu selection acceptor.

Still further in accordance with a preferred embodiment of the present invention, the apparatus also includes a caller learning system operative to save at least one menu selection presented by a user and wherein the caller prompter is operative to present a query to the caller offering to access at least one saved menu selection and to surf the information network based on the saved menu selection.

Additionally in accordance with a preferred embodiment of the present invention, the apparatus also includes a text format analyzer operative to perform a generally contentless analysis of the text format of the textual information of interest, to identify meaningful portions within the textual information of interest and relationships therebetween, to generate a string of speech which represents the meaningful portions within the textual information of interest and the relationships therebetween and to feed the string of speech to the text to speech converter.

Further in accordance with a preferred embodiment of the present invention, the meaningful portions and relationships therebetween are represented in the textual information using a menu/submenu structure.

Still further in accordance with a preferred embodiment of the present invention, the information network includes a Teletext network.

Additionally in accordance with a preferred embodiment of the present invention, the text to speech converter is operative to convert textual information to speech output at a user-selected speed, from among a plurality of conversion speeds, according to a user's preferences.

Further in accordance with a preferred embodiment of the present invention, the text to speech converter is operative to receive from a caller an indication of the caller's preference of at least one characteristic of the speech output of the converted text, and is operative to alter the at least one characteristic of the speech output to the caller according to the caller's preference.

Still further in accordance with a preferred embodiment of the present invention, the at least one characteristic includes the speed of the speech output.

Additionally in accordance with a preferred embodiment of the present invention, the text to speech converter is operative to receive formatting information regarding specific formatting of the textual information from the text format analyzer, and is operative to change at least one characteristic of the speech output according to the formatting information.

Further in accordance with a preferred embodiment of the present invention, the at least one characteristic of the speech output includes the tone of the speech output.

There is also provided, in accordance with another preferred embodiment of the present invention, central apparatus for providing computerless surfing of an information network, the apparatus including a telephone connection allowing an individual caller from among a population of computerless subscribers to make an incoming call to the central apparatus, a menu selection acceptor operative to accept a menu selection from the individual caller, and a server connecting the incoming call to an information network and surfing the information network responsive to the caller's menu selections, to access information of interest to the caller, and to feed the information onto the telephone connection.

There is additionally provided, in accordance with another preferred embodiment of the present invention, a method for computerless surfing of an information network, the method including accepting a menu selection from an individual caller, via a telephone connection allowing a caller from among a population of computerless subscribers to make an incoming call to a central apparatus, connecting the individual caller's incoming call to an information network and surfing the information network responsive to the caller's menu selections, to access information of interest to the caller, and converting the textual information of interest to the caller into speech output and feeding the speech output over the telephone connection to the individual caller.

There is further provided, in accordance with another preferred embodiment of the present invention, a method for computerless surfing of an information network. the method including accepting a menu selection from an individual caller, via a telephone connection allowing a caller from among a population of computerless subscribers to make an incoming call to a central apparatus, connecting the individual caller's incoming call to an information network and surfing the information network responsive to the caller's menu selections, to access information of interest to the caller, and feeding the information onto the telephone connection.

There is also provided, in accordance with another preferred embodiment of the present invention central apparatus, operative in conjunction with a navigation device, a telephone network, and a vehicle, for providing computerless surfing of an information network, the apparatus including a navigation device, at least partially mounted in the vehicle, operative to provide information regarding the present specific localization of the vehicle, to the central apparatus, via a telephone connection, a telephone connection, mounted in the vehicle, operative to transfer information regarding the present specific localization of the vehicle, from the navigation device to the central apparatus, an acceptor operative to accept the information from the navigation device via the telephone connection, a server operative to connect to the information network and to surf the information network responsive to the specific localization information, to access textual information relevant to the specific localization of the vehicle, and a text-to-speech converter operative to convert the textual information into speech output, and to feed the speech output over the telephone connection to an individual caller, in the vehicle.

Further in accordance with a preferred embodiment of the present invention, a caller in the vehicle provides information regarding a travel vector of the vehicle, via the telephone connection, to the server, and wherein the server is operative to combine information regarding the present specific localization of the vehicle, and the travel vector, to anticipate a future location of the vehicle, and to surf the information network for textual information relevant to the anticipated future location of the vehicle.

There is additionally provided, in accordance with another preferred embodiment of the present invention, central apparatus, for use in conjunction with a telephone network, for providing computerless Internet "chat", the apparatus including a telephone connection allowing an individual caller from among a population of subscribers to make an incoming call to the central apparatus, a menu selection acceptor operative to accept a menu selection from the individual caller, a server connecting the incoming call to the Internet, and surfing the Internet responsive to the caller's menu selections. to access an Internet chat "room" including textual chat from at least one contributor, a speech-to-text converter operative to convert the caller's speech into textual chat, and to feed the textual chat to the Internet chat room, wherefrom the textual chat can be accessed by each of the at least one contributors, and a text-to-speech converter operative to convert textual chat into speech output and to feed the speech output over the telephone connection to the individual caller.

Further in accordance with a preferred embodiment of the present invention, the text-to-speech converter is operative to modify the speech output of the converted textual chat such that the speech output converted from the textual chat from each of the at least one contributors to the textual chat room can be differentiated by the caller.

There is also provided, in accordance with another preferred embodiment of the present invention, a method, operative in conjunction with a navigation device, a telephone network, and a vehicle, for computerless surfing of an information network, the method including providing information regarding the present specific localization of the vehicle, from the navigation device at least partially mounted in the vehicle, to a central apparatus, via a telephone connection, accepting information regarding the present specific localization of the vehicle, from the navigation device, via a telephone connection to a central apparatus, connecting the incoming localization information to an information network, surfing the information network, responsive to the specific localization information to access textual information relevant to the specific localization of the vehicle, converting the textual information of relevance to the specific localization into speech output, and feeding the speech output over a telephone connection to an individual caller in the vehicle.

Additionally in accordance with a preferred embodiment of the present invention, the method also includes a caller in the vehicle providing information regarding a travel vector of the vehicle, via the telephone connection, to the server, combining the information regarding the present specific localization of the vehicle, and the travel vector, to anticipate a future location of the vehicle, and surfing the information network for textual information relevant to the anticipated future location of the vehicle.

Still further in accordance with a preferred embodiment of the present invention, the information network includes the Internet.

There is further provided, in accordance with another preferred embodiment of the present invention, a method, for use in conjunction with a telephone connection, for computerless Internet chat, the method including accepting a menu selection from an individual caller, via a telephone connection allowing a caller from among a population of subscribers to make an incoming call to a central apparatus, connecting the individual caller's incoming call to the Internet and surfing the Internet responsive to the caller's menu selections, to access an Internet chat "room" including textual chat from at least one contributor, converting the caller's speech into textual chat, and feeding the textual chat to the Internet chat room, wherefrom the textual chat can be accessed by each of the at least one contributors, and converting the textual chat into speech output and feeding the speech output over the telephone connection to the individual caller.

Further in accordance with a preferred embodiment of the present invention, the method also includes modifying the speech output of the converted textual chat such that the speech output converted from the textual chat from each of the at least one contributors to the textual chat room can be differentiated by the caller.

There is also provided, in accordance with another preferred embodiment of the present invention, central apparatus for providing computerless surfing of radio channels, the apparatus including a telephone connection allowing an individual caller from among a population of subscribers to make an incoming cail to the central apparatus, and a server including a menu selection acceptor operative to receive the incoming call over the telephone connection, and to accept at least one menu selection from the individual caller, a sound card operative to convert radio signals into audio files, and wherein the server is operative to store the audio files converted from radio the signals, to access the audio files of interest to the caller, and to feed the audio files as speech output over the telephone connection to the individual caller.

There is also provided, in accordance with another preferred embodiment of the present invention, a method for computerless surfing of radio channels, the method including converting radio signals into audio files and storing the audio files on a server, accepting at least one menu selection from an individual caller, via a telephone connection allowing a caller from among a population of computerless subscribers to make an incoming call to a central apparatus, accessing the audio files of interest to the caller, and feeding the audio files as speech output over the telephone connection to the individual caller.

Still further in accordance with a preferred embodiment of the present invention the at least one menu selection includes the selection of at least one characteristic relating to the broadcasting of the radio signals.

Additionally in accordance with a preferred embodiment of the present invention the at least one characteristic includes at least one of the time of broadcast of the radio signals, and the radio frequency of the radio signals.

Further in accordance with a preferred embodiment of the present invention the at least one menu selection includes the selection of at least one characteristic relating to the content of the radio signals.

Still further in accordance with a preferred embodiment of the present invention the at least one characteristic includes at least one of the title of a specific radio program, and the subject of a specific radio program.

### BRIEF DESCRIPTION OF THE DRAWINGS

The present invention will be understood and appreciated from the following detailed description, taken in conjunction with the drawings in which:
Fig. 1 is a simplified block diagram of computerless surfing apparatus constructed and operative in accordance with a first preferred embodiment of the present invention;
Fig. 2 is a simplified block diagram of computerless surfing apparatus constructed and operative in accordance with a second preferred embodiment of the present invention;
Fig. 3 is a simplified block diagram of computerless surfing apparatus constructed and operative in accordance with a third preferred embodiment of the present invention;
Fig. 4 is a simplified block diagram of computerless surfing apparatus constructed and operative in accordance with another preferred embodiment of the present invention;
Fig. 5 is a simplified illustration of a computer screen display, which enables a user to provide the server of Fig. 4 with his/her personal selection of information that s/he would like to receive;
Fig. 6 is a simplified block diagram of computerless surfing apparatus constructed and operative in accordance with a another preferred embodiment of the present invention;
Fig. 7 is a simplified block diagram of computerless surfing apparatus constructed and operative in accordance with another preferred embodiment of the present invention, including a web page converter operative to convert regular web pages into meaningful menus;
Fig. 8 is a simplified flow chart illustrating a preferred method of operation of the web page converter of Fig. 7;
Fig. 9 is a simplified flow chart illustrating a preferred method for creating menu items from a web page, according to web page specific characteristics, during creation of a menu tree by the web page converter of Fig. 7;
Fig. 10 is a simplified illustration of an example of a conventional web page on the Internet;
Fig. 11 is a simplified illustration of an example of a menu tree, as constructed by the web page converter of Fig. 7., from the web page of Fig. 10;
Fig. 12 is a simplified block diagram of computerless surfing apparatus, integrated with GPS or another navigation device, constructed and operative in accordance with another preferred embodiment of the present invention;
Fig. 13 is a simplified block diagram of apparatus for telephone-based audio retrieval of Teletext information, constructed and operative in accordance with another preferred embodiment of the present invention; and
Fig. 14 is a simplified block diagram of apparatus for telephone-based Internet chat, constructed and operative in accordance with another preferred embodiment of the present invention.

### DETAILED DESCRIPTION OF PREFERRED EMBODIMENTS

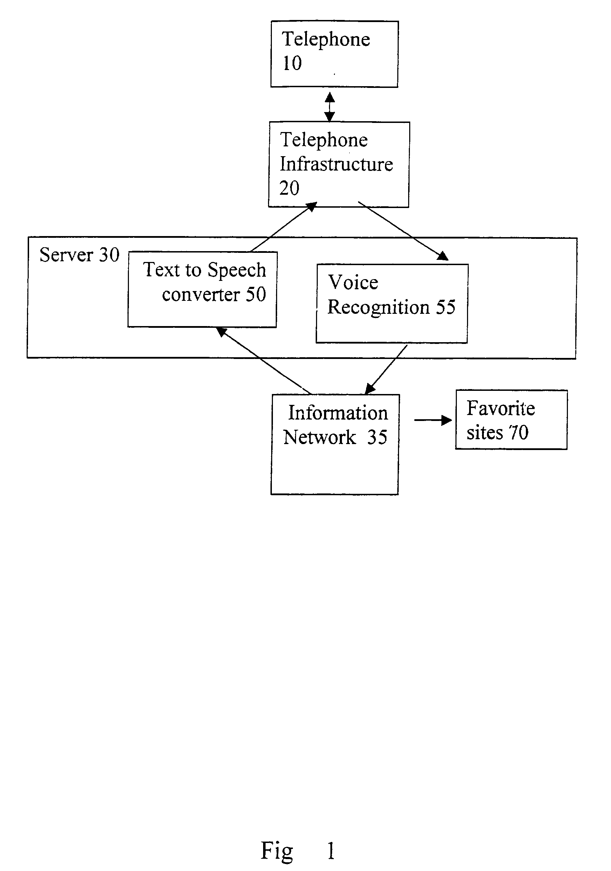

Reference is now made to Fig. 1, which is a simplified block diagram of computerless surfing apparatus constructed and operative in accordance with a first preferred embodiment of the present invention. As shown, a conventional telephone (10) is connected to conventional telephone infrastructure (20). The caller dials a predetermined number which is connected to a server (30). The server (30) may comprise a standalone server such as Microsoft Operating system Windows NT version 4.0. Alternatively, the server may be part of a conventional voice mail system such as the Trilogue voice mail system available from Efrat Future Technologies Ltd.

The server typically gives the caller a selection menu. For instance:
"Good morning.
To hear news say "one" after the tone.
To hear sports say "two" after the tone.", and so on.

The caller preferably communicates with the server (30) from his/her telephone (10), and selects one of the menu items. In response, the server (30) communicates with an information network (35) such as the Internet, and retrieves textual information. For example, if the user chooses news, the server brings the news from the information network (35).

Once the text piece of data is brought to the server, it is converted to speech by a text to speech converter (50), such as a Microsoft Speech SDK 4.0 Beta-2 text to speech converter, typically residing within, or otherwise preferably operatively associated with, the server (30). The Text to Speech converter (50) preferably receives a string of words in a normal text ASCII format and converts it to speech. This converted speech is sent back to the user via the conventional telephone infrastructure (20).

Typically, the input options presented orally to the user via the telephone are arranged as a hierarchy of menu/submenu selections.

This is an example of a menu:
"To hear news say "one".
To hear Sports say "two"."

A Submenu is presented once the caller chooses one of the items from the menu. For example, if the caller chooses 1, the following menu can presented:
"To hear world news say "one".
To hear business news say "two"."

A voice recognition module (55) typically converts the user's speech into a navigation command, i.e. the voice recognition module (55) acts as a menu selection acceptor. The voice recognition module (55) which typically resides within, or is otherwise operatively associated with, the server (30), gets an input of an audio stream that is said by the caller, and translates it to known commands. For instance, the caller says "One", and the module converts it to an ASCII string that contains the letters "One". The Microsoft Speech SDK 4.0 Beta-2 system performs both text to speech conversion and voice recognition and hence comprises one appropriate implementation of both of units (50) and (55).

The system is preferably operative to analyze the global preferences of the population of subscribers, and to offer, to a user, a list of the most popular information providers or sites (70).

It is appreciated that user input to the server (30) need not comprise only oral input, and that alternative modes of input are possible. For such an embodiment, the voice recognition module (55) is typically not required.

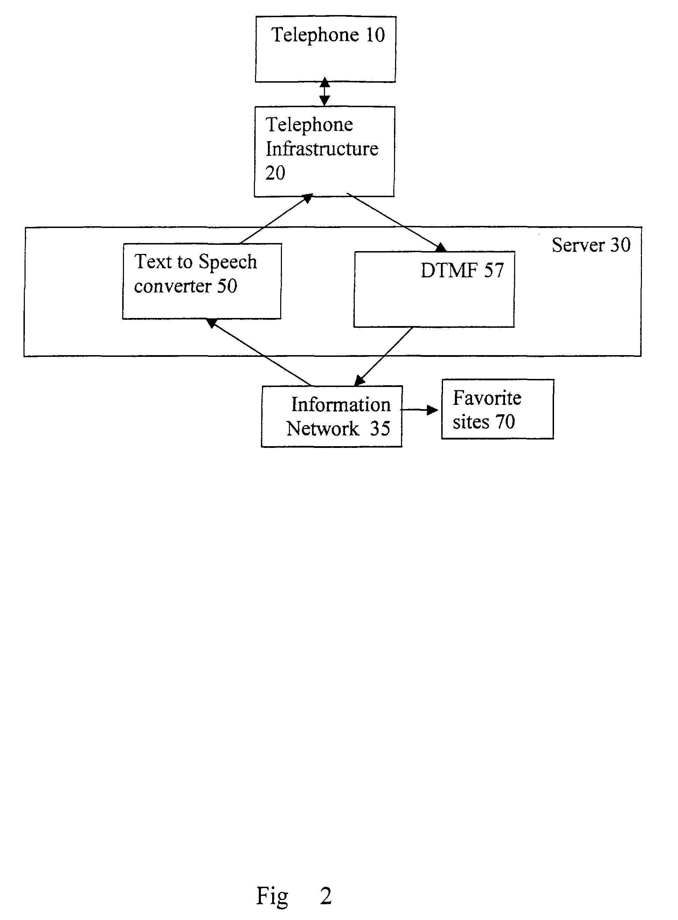

Reference is now made to Fig. 2 which is a simplified block diagram of computerless surfing apparatus constructed and operative in accordance with a second preferred embodiment of the present invention. As shown, the voice recognition module (55) of Fig. 1 has been replaced by a Dual Tone Multi-Frequency (DTMF) unit (57).

In this embodiment, the user may be prompted, in response to the selection menu, to press 1 on a touch-tone telephone rather than uttering the word "One". A suitable off-the-shelf DTMF device capable of interpreting this input is Dialogic d21/d, used in conjunction with Parity Software's VOS Version 6.0.

It is appreciated that the process of a user choosing, selecting or entering a response to a presented menu selection may comprise a vocal response, or pressing a button on a DTMF device, or any other method of inputting the user's selection to the server (30).

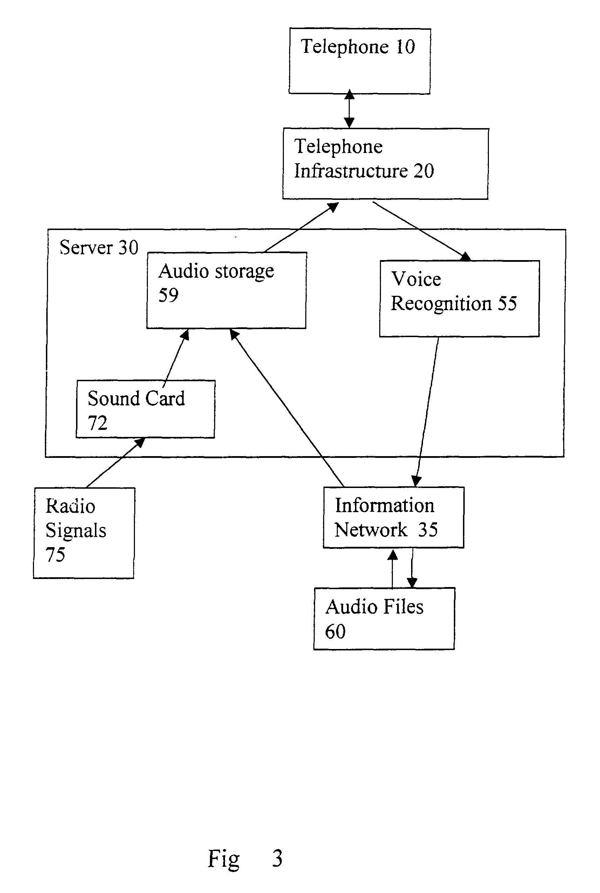

Reference is now made to Fig. 3 which is a simplified block diagram of computerless surfing apparatus constructed and operative in accordance with a third preferred embodiment of the present invention. In the embodiment of Fig. 3, the function of the text to speech converter (50) of Fig. 1 is typically not required, and the audio information is provided by the audio files (60).

Responsive to a user's choices, which the user communicates via the telephone (10) as described above, the server (30) preferably communicates with the information network (35), and retrieves audio files (60) which are already stored in the Internet and pushes these to the user via the telephone infrastructure (20) and the telephone (10). The audio files are typically stored in the audio storage (59), which is preferably disk space in the server.

It is appreciated that audio files (60) may come from the Internet or may originate from other sources such as radio signals (75). Sound cards (72) that preferably reside in the server (30) are typically used to digitize radio signals (75) into audio sound files.

The audio sound files, converted from radio signals, are preferably stored in the audio storage (59) of the server (30) together with some menu information regarding the files. This menu information typically includes the name of the radio station, the radio frequency of broadcast, the time of broadcast, and program subject information where available. Such information may be taken from radio programming guides, e.g., located on the Internet. The user is preferably presented orally, via the telephone, with an array of menu/submenu selections, and the user selects, based upon this menu information, an audio file for listening to.

The Internet currently includes many audio files (60) at various sites such as CNN, ABCnews, and www.broadcast.com for news; ESPN for sports, and so on. These files are ready to be broadcast by the system. By making suitable links to these sites, a user can listen to them via the telephone without having to resort to using a computer.

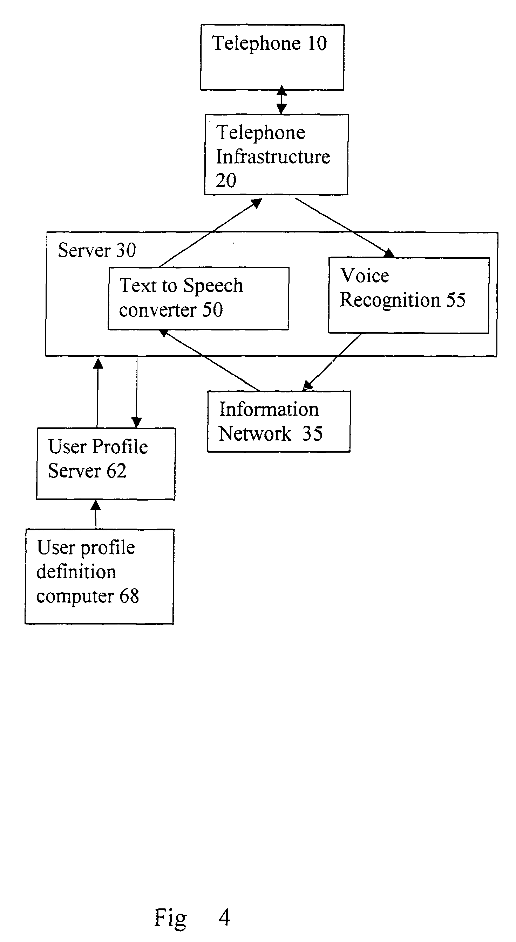

Fig. 4 is a simplified block diagram of computerless surfing apparatus constructed and operative in accordance with a another preferred embodiment of the present invention which is operative to learn caller preferences and to modify future presentations to each caller based on preferences exhibited by that caller in the past.

User preferences may be stored in the server (30), or in a separate user profile server (62). Preferably, the server (62), or the server (30), stores, for each user, a profile of his or her previous selections. For instance, if the caller chooses to hear about a certain stock, this selection is stored, and the next day, as a default, the caller may be prompted directly to select to hear information regarding the same stock without having to surf and reach this information by choosing menu and submenu items.

A typical menu may be as follows:
"To hear your previous selection choose 1." (Alternatively, the previous selection may be identified, e.g. for a user who has previously elected to hear information regarding BT&T: "To hear information about BT&T stock choose 1.")
"To hear news choose 2."
"To hear sports choose 3."

Each user profile is typically defined by learning each user's selections and stored in the server (62), or server (30). Alternatively, a user profile may be defined via a separate computer (68) that is connected to the server (62). In this case, there is preferably a preliminary training stage in which the user makes his or her preferences known to the computer (68).

The training stage typically, although not necessarily, involves a computer (68) to allow text menus to be presented rather than only oral menus. The user is typically prompted, by the computer (68), to choose his or her preferences from a text menu without having to surf and hear about them. For instance, s/he can elect to hear about various stocks whose identity s/he selects. The next time s/he calls in, this selection will be heard, or will be presented to him or her, preferably as the first option in a menu.

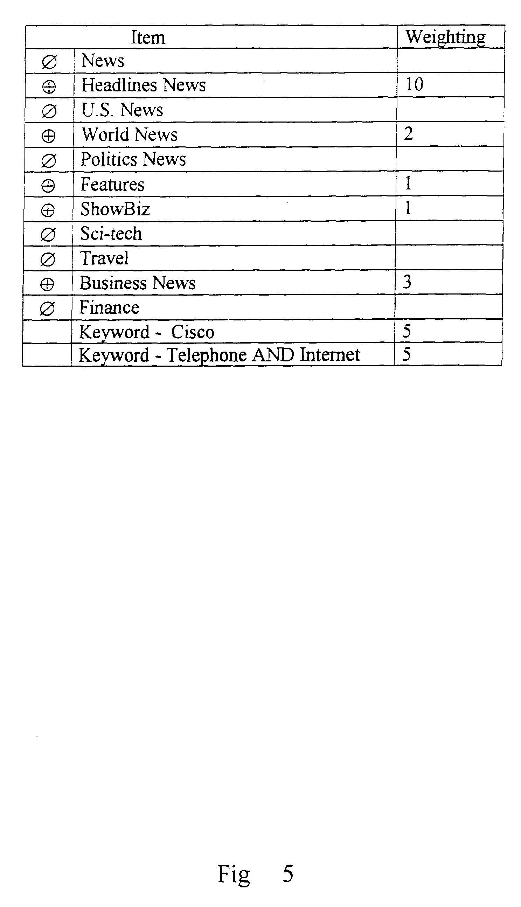

Fig. 5 is a simplified illustration of a computer screen display which enables a user, by checking boxes adjacent to the desired selection, to provide the server of Fig. 4 with his/her personal selection of categories of information that s/he would like to receive. As shown. the user has selected Headline News, World News, Features, ShowBiz, and Business News as indicated by "⊕" adjacent to the desired selection. The user has also selected "Cisco" and "Telephone AND Internet" as keywords relating to the information that s/he would like to receive.

In addition to selecting categories and keywords, the user is preferably operative to provide each selection with a relative priority weighting. As shown in Fig. 5, information relating to Headline News has the highest priority weighting, followed by the keywords "Cisco" and "Telephone AND Internet". Features and ShowBiz have the lowest priority weighting. When an information output selection menu is presented to a user, information relating to keywords or categories with a higher priority weighting are typically offered as options to a user before items on the menu with a lower priority weighting..

The user is also preferably able to input to the server (62) via the computer (68), or to the server (30) via the voice recognition unit (55), his/her preferences of the characteristics of the speech output. Such characteristics may include the tone, the speed, the volume and the vocal gender of the speech output. The text to speech converter (50) is also preferably operative to alter none, any, or all of these characteristics of the speech output to the user, based upon the user's preferences.

For example, a user is preferably able to indicate to the server (62 or 30) an indication of his/her preference of the speed at which the speech output of the text to speech converter (50) is to be provided to the user, via the server (30), the telephone infrastructure (20) and the telephone (10). The text to speech converter (50) preferably changes the speed of the speech output to the user to the user's preferred speed. The speech output speed preference for each user is preferably added to the user's profile, and stored in the server (62) or the server (30). At each subsequent interaction, speech output is preferably provided at the user's preferred rate.

The server (30) is preferably able to analyze the user's habits and preferences, and to optimize the access speed to the information via the menus. For example, the server (30) may bring, and the text to speech converter (50) convert, some of the preferred information in advance of the user's selection, to make the surfing faster and to utilize the network's idle time.

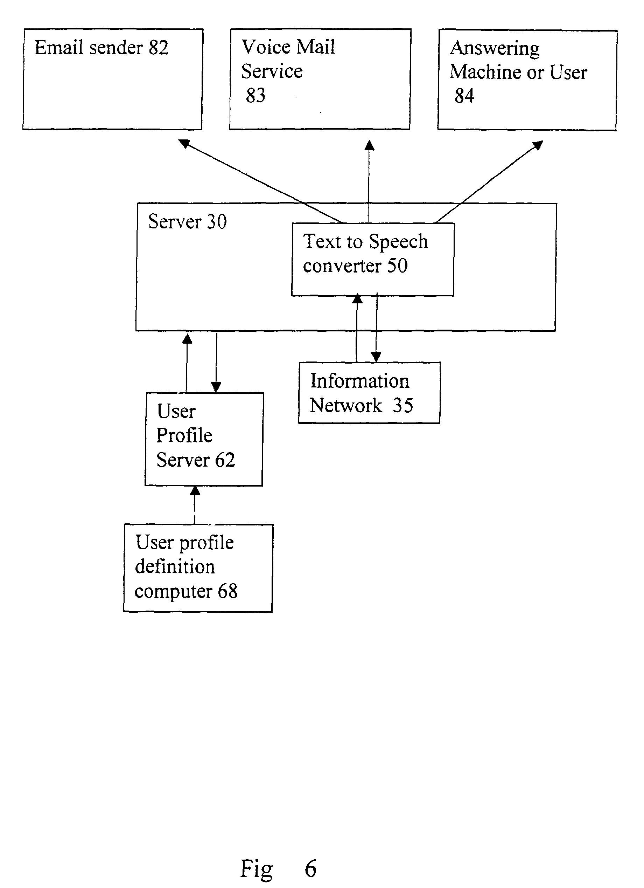

Reference is now made to Fig. 6 which is a simplified block diagram of computerless surfing apparatus constructed and operative in accordance with another preferred embodiment of the present invention. A user can request the system to inform him/her when information is available on a specific site, which request is typically stored as part of the user profile on the server (62). This request is typically, although not necessarily, inputted via a computer (68), which allows text menus to be presented to the user. rather than only oral menus.

The request for information is typically passed to the server (30) which communicates with the information network (35) and checks periodically if the requested information is available. If available, the server may typically leave this information in the mailbox of a user's private email account (82), save the oral information in a user's telephone voice mail service (83) or send it automatically as a telephone call to the user, which may be listened to immediately by the user, or stored in a standard telephone answering machine (84).

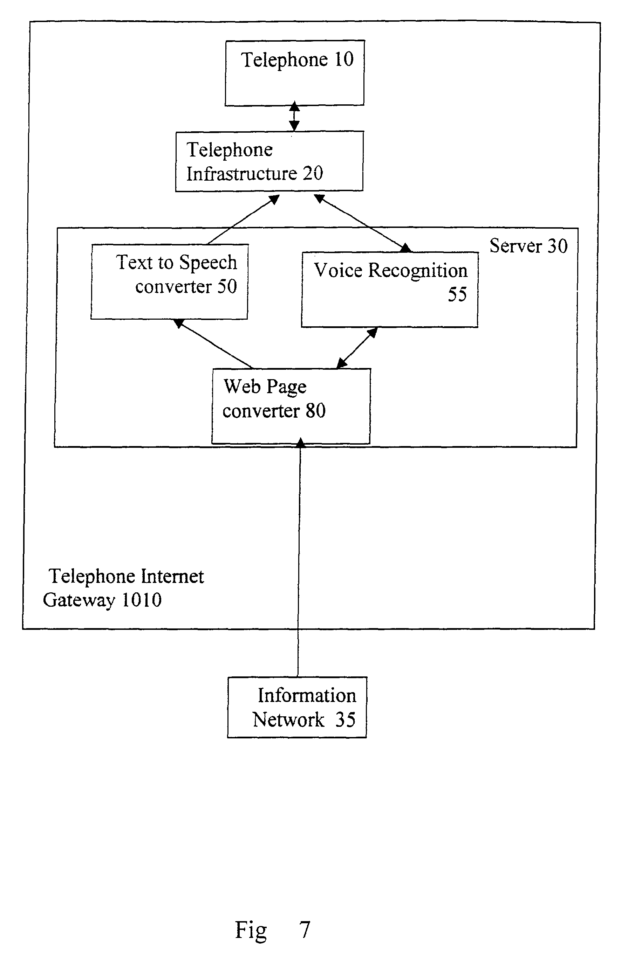

Reference is now made to Fig. 7 which is a simplified block diagram of computerless surfing apparatus constructed and operative in accordance with another preferred embodiment of the present invention which includes a web page converter (80) operative to convert regular web pages into meaningful menus. Typically, the web page converter (80) comprises a software module residing in the server (30). The totality of the telephone (10), the telephone infrastructure (20), the server (30), the text-to-speech converter (50), the voice recognition unit (55) and the web page converter (80) is herein referred to as a telephone Internet gateway (1010).

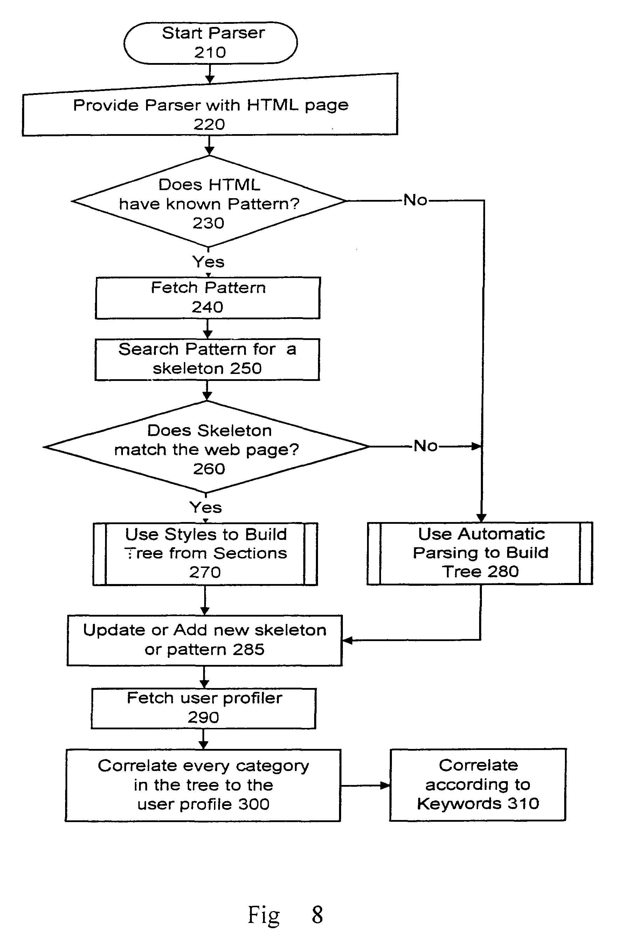

Reference is now made to Fig. 8 which is a simplified flow chart illustrating a preferred method of operation of the web page converter (80) of Fig. 7.

The parser function (210) of the web page converter (80) typically takes an HTML page (220), e.g. from the Internet, as an input and returns some of the data stored therein to a user.

Known HTML web page patterns are typically stored in the server (30). If the web page does not have a known pattern (230), automatic parsing is preferably used to build a menu tree from the web site (step 280).

If the web page does have a known pattern (step 230), it is preferably processed according to its pattern.

A pattern is the data structure that describes a textual file, such as an HTML file. The pattern holds all the information that describes a specific page or folder. The folder information is used especially on a Web site where the pattern may define global settings to a folder, and to all the pages inside it. Special marks are then used in individual pages to override these global settings where appropriate.

Pattern information is divided into several types.
1. Global properties, i.e. structure rules and special marks that define different fields of text.
2. Page configuration, i.e. links to other pages.
3. The skeleton, i.e. the rigid structure of a web page for parsing purposes. This information relates to the location of the various sections of a web site which is particularly important as there is no generic skeleton for Internet web sites, and sites which may appear to have a similar structure, may have items located on different parts of the pages. The skeleton may be used to verify that parts of a page have not been changed, as well to identify different sections. An individual web site pattern may include several different skeletons which are employed on different occasions.
4. Section properties, i.e. the type, level, category, style etc. of the sections. This is a set of parsing instructions that defines the structure of a section.
5. Alternative sites, i.e. a site that is similar to the original site, which is preferably accessed if the originally selected site is not responding, whether due to a problem at the site, or in the connection to the site, or for any alternative reason. For example, CNN.COM, typically has alternatives such as a mirror sire, e.g. CNN.CO.IL, or another News site with similar content profile, such as ABCNEWS.COM.

A category is an attribute which categorizes menu tree items to common interest groups, e.g., sport, business, etc. A style is used in a pattern to help the parser understand the atomic parts of a content or a menu, e.g., size 14 font, red font, italics etc. A style is reused wherever possible, by giving it a name, which reduces storage and bandwidth.

If the pattern is known (230) the pattern is fetched (step 240) from the server (30), the pattern is searched for all the corresponding skeletons (step 250).

If none of the skeletons for the pattern match (step 260) the structure of the web page, automatic parsing is preferably used to build a menu tree from the web site (step 280).

If a skeleton is found (step 260) which matches the structure of the web page, the skeleton is typically used to direct the parsing to specific regions, and a tree is built directly from the sections of the web page using the styles identified in the pattern (step 270). The menu tree may be derived from a skeleton with styles superimposed on the appropriate sections of the skeleton (step 270). However, the same tree, containing the same information, may be derived from the automatic parsing (step 280). A menu tree is the output of the parsing, whether the parsing was directed by a skeleton or not.

Once a pattern and/or a skeleton has been built for any specific web page, it is preferably stored (step 285) in a memory (not shown) in the server (30) so that subsequent users who wish to access the web page can use the same pattern information, without the menu tree having to be rebuilt. In the case of known patterns or skeletons not matching the web page, the stored pattern or skeleton is preferably updated to incorporate these differences (step 285). If there was no known skeleton for a web page, a new skeleton is typically created and stored in the server (30).

Once a web page is parsed, with or without use of a skeleton, the user profile is fetched (step 290) from the server, and the tree correlated with the user profile (step 300). For example, if the parser identifies a section as "sports" and the user has indicated that s/he likes sports, then this section will be added to the user profile as a section to be offered to the user. This correlation may work by matching the categories (step 300) in the user profile with the categories in the tree, or by keyword scanning (step 310). Each category and keyword selection preferably has a priority weighting, input by the user, which is typically used to determine the order of presentation of the sections to the user

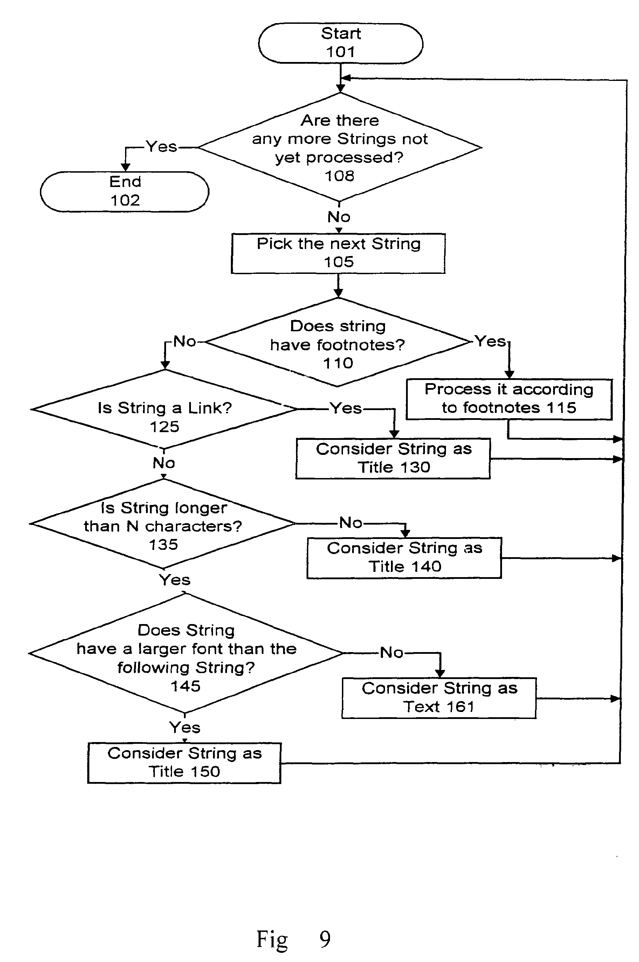

Fig. 9 is a simplified flow chart illustrating a preferred method for creating menu items from a web page, according to web page specific characteristics, during creation of a menu tree by the web page converter (80) of Fig. 7. Fig. 9 thus corresponds to step 280 of Fig. 8.

The content of an HTML web page is a series of strings of characters, with the beginning and the end of each string indicated by tags in the HTyML file. Each string is typically analyzed in the following manner (105).

If the string has footnotes/special tags (step 110), it is typically processed by the instruction/information provided in that tag (step 115), e.g. as follows:

Footnotes/tags may be inserted into the HTML file by each site builder, which footnotes are operative to instruct the web page converter (80). For example, a footnote in the HTML file may indicate that the following 10 characters are a menu title. The footnotes (tags) preferably instruct the converter (80) how to treat every item in the section.

Dealing with image buttons typically requires different approaches. Images contain graphical data, and even if something is written on the surface of the image, it is graphical and cannot be read like simple textual data. Several methods may be employed to parse images, for example:
1. Taking the image name or tag as a representative of its functionality. Every image has a name, written in HTML, which usually refers to something meaningful, e.g., an advertisement button may be called "advertisement1".
2. Taking an optical character recognition analysis of the image's text. An example of OCR software that can be used to convert a graphical image to text is Caere Devkit 2000.

It is appreciated that some special tags may redirect the server to bring a special replacement page or audio file.

In the absence of special tags, the web page converter (80) typically analyzes each string according to font size, links and length of character strings.

If the string is a link (step 125), i.e. a text portion in HTML format that is linked to another page, then the string is defined as a menu title (step 130).

If the string is not a link, the number of characters in the string is analyzed (step 135). If the string is equal to or less than N characters, where N is configurable, it is considered to be a title (step 140).

The font size of the character string is typically analyzed (step 145). The converter (80) preferably generates a menu based on font size, as titles normally have a larger font size than text. Thus if the string has a larger font size than the following string (step 145), it is typically considered to be a title and hence becomes a menu or submenu item (step 150). If the font size is not larger than that of the following string, it is considered to be text (step 161).

The parsing stops at the last string. It is appreciated that any suitable cues or criteria may be employed for conversion of web page text into a menu.

Throughout the iteration of the method shown in Fig. 9, as each string is categorized the derived information is added to a growing menu tree. Once all the strings have been analyzed (step 108), the web page processing is finished, and the menu tree, i.e. a representation of the web page, is completed. The menu tree attributes different characteristics to the various strings, e.g. which string is text, which is title etc.

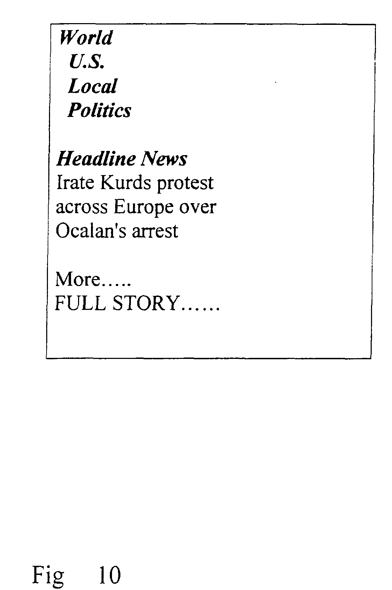

An example of the function of the web page converter (80) is described hereinbelow. Fig. 10 is a simplified illustration of an example of a conventional home page on the Internet. The web page converter (80) preferably analyzes the text of such a web page, and generates therefrom a textual menu suitable for presentation.

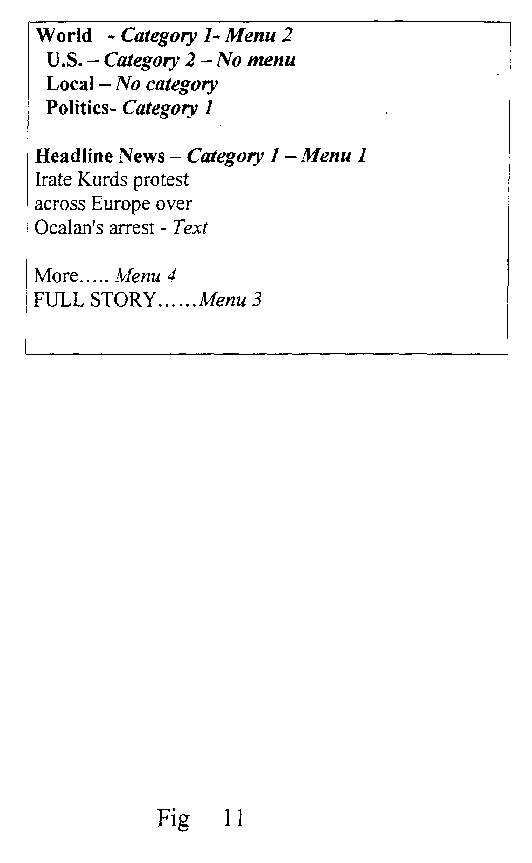

Fig. 11 is a simplified illustration of an example of a menu tree, as constructed by the web page converter (80) of Fig. 7., from the web page shown in Fig. 10. The web page menu tree is typically used by the web page converter (80) to provide a series of menu and sub-menu options to be output to the user.

The textual menus and submenus are input for the text to speech converter (50) that converts normal text from a web page to speech that is presented to the user over the telephone. It is appreciated that the text to speech converter (50) and the web page converter (80) may comprise a single module.

Within the menu tree, some elements are designated for converting to speech by the text to speech converter (50) and presented to the user. Each item preferably has a priority weighting, input by the user, which typically determines the order of presentation to the user. For example, in the menu tree of Fig. 11, Headline News is shown in menu 1. Thus the user typically hears:
"Good morning. You have reached the home page of Passcall company. To listen to Headline News say "1"."
If the caller chooses "1", the appropriate submenu is heard.

It is appreciated that generation of a menu and hierarchy between the contents of each Internet site may be performed only once, or at very long intervals, because major sites do not change very often.

A learnt pattern of a web site is preferably also periodically compared to the actual web site, and the presence of discrepancies between the learnt pattern and the actual pattern is a sign that the web site has changed and that the specific learnt pattern is to be updated.

According to a preferred embodiment, the web page converter (80) preferably recognizes grammatical, linguistic and formatting characteristics of the text of the web page. Such characteristics typically include parentheses, commas, new paragraphs, tables etc. The text to speech converter (50) is preferably operative to alter none, any, or all of the characteristics of the speech output to the user, such as the tone, the speed and the vocal gender of the speech output, based upon the characteristics of the text recognized by the converter (80). For example, the tone of the speech output may preferably be altered to differentiate between an output of text converted from a web page, and instructions from the system. In another example, menu items or titles may be output in a female voice, and body text in a male voice.

According to another preferred embodiment, a user is preferably able to navigate around a converted web page, through either spoken or keypad entered commands. Typical spoken commands may include "stop", "repeat", "back" etc.

According to a preferred embodiment of the present invention, substantially the entirety of the Internet is made available via the telephones and not only those files that are actually audio. This is achieved by use of conventional Text-To-Speech technology in order to take any file from the Internet and convert it to speech.

Optionally, every site subscriber is supplied with an Audio Editor. The site builder then adds instructions in the HTML file for conversion of a text-based menu to an audio-based menu. These instructions are typically stored inside conventional HTML files (the files that are seen by the user during Internet surfing, but in which the instructions are hidden, from the user's point of view).

Once the system of the present invention connects to such a site, it converts the instructions to the audio menu. For example if Amazon.com uses the audio editor described herein, Amazon is preferably able to decide that the first choice is CDs and the next choice is Books. Amazon is also preferably able to decide exactly what article to put in the menu.

A particular advantage of a preferred embodiment of the present invention is that webmaster involvement is minimal, and that entire sites, which do not actually reside on the Internet in audio form can be heard, by means of text-to-speech conversion.

Preferably, the apparatus of the present invention is capable of providing an "interactive radio" effect. For example:
User is driving to a meeting. The driving takes about 1 hour.
User enters car and turns on the radio.
Radio: "Good morning. Please say your name".
User says name to the radio.
User is immediately treated to traffic report in her area, and the current status of her 3 favorite stocks.

After this, user listens to the local news, hears about a new exhibition in the local Museum, listens to World News Digest, listens to business news focused on her fields of interests: technology and Information Technology, and hears headline of a Public Relations announcement of a competitor.

User chooses to hear more about the announcement by simply saying "more". Responsive to "more", interactive radio presents all details about the announcement, and comments from analysts about it.

In the middle of this rendition, user hears "breaking news": The stock LORAL passed user's limit. User decides to purchase 1000 stocks instantly and conveys this information by simply stating: "buy", "1", "0", "0", "0".

Analyst comments about competitor's announcement go on from the point they stopped before the breaking news.

Ten minutes before the meeting user decides to be briefed about the company s/he is going to meet. By saying the company's name, a user is presented with an oral rendition of the latest company news and balance.

Back in the car after the meeting, user hears spouse message that he has already picked up the children from their day-care center, and then is presented with traffic reports.

User decides to listen to an oral presentation of a new book called "Startups in Israel: the true story". The book is presented orally, from page 125, which is where user left off listening the day before.

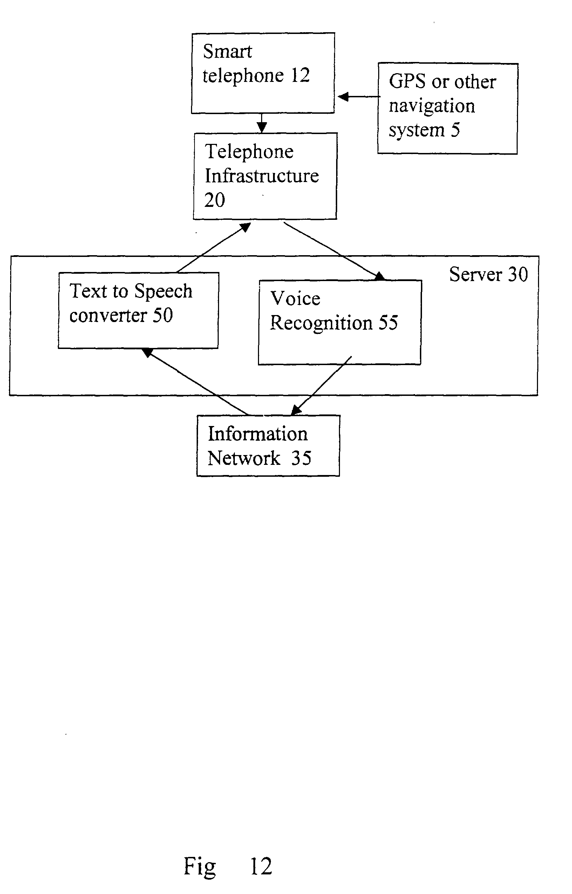

Reference is now made to Fig. 12 which is a simplified block diagram of computerless surfing apparatus, integrated with GPS or another navigation device, constructed and operative in accordance with another preferred embodiment of the present invention.

This preferred embodiment is typically used while driving or traveling in a car. Information, from a navigation device (5), regarding the present location of the car, is preferably used to provide the user with information obtained from an information network (35) such as the Internet, related to that specific location. The information provided may include weather reports, traffic conditions, parking availability etc. As shown, localization information from a navigation system (5) is transferred through a smart phone (12) and the telephone infrastructure (20) to the server (30). The server (30) accesses information, relevant to the specific localization, from an information network (35) and after text to speech conversion by the converter (50), the server (30) returns the information to the user as speech via the telephone infrastructure (20) and the telephone (10).

In another preferred embodiment, a caller in the vehicle typically provides information, via the smart telephone (12) to the voice recognition unit (55) of the server (30) regarding a travel vector of the vehicle. The server preferably combines the information, provided by the GPS (5), regarding the present specific location of the vehicle and the inputted travel vector, to anticipate a future location of the vehicle. The server (30) preferably surfs an information network (35) such as the Internet, for information relevant to the anticipated future location of the vehicle, and provides a user with the relevant information.

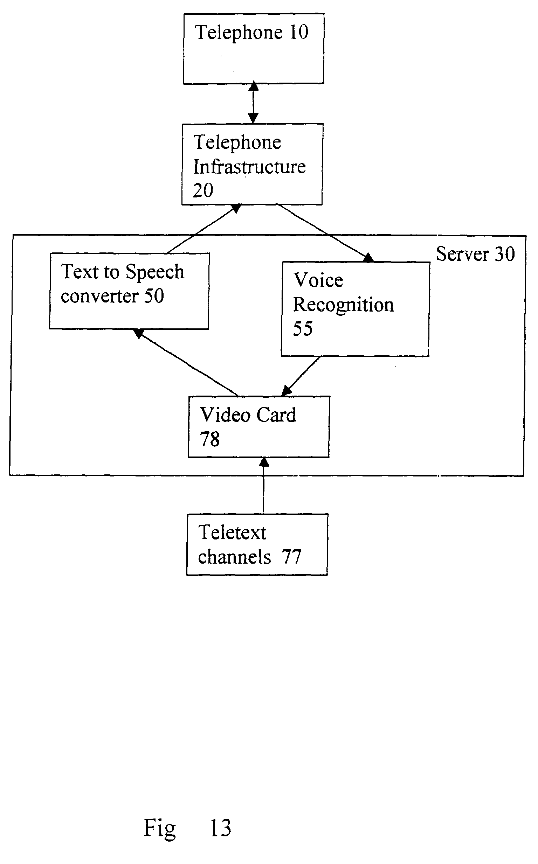

Reference is now made to Fig. 13 which is a simplified block diagram of apparatus for telephone-based audio retrieval of Teletext information, constructed and operative in accordance with another preferred embodiment of the present invention.

As shown, requests for information are passed via a telephone (10) and telephone infrastructure (20) to a server (30). The voice recognition unit (55) of the server (30) interprets the user's vocal request and via a video card (78) extracts relevant information room Teletext channels (77). Teletext information is typically provided in a menu driven format, and typically thus does not need to be converted into this format by the server (30). After text to speech conversion by the converter (50), the server (30) returns the information to the user as speech via the telephone infrastructure (20) and the telephone (10).

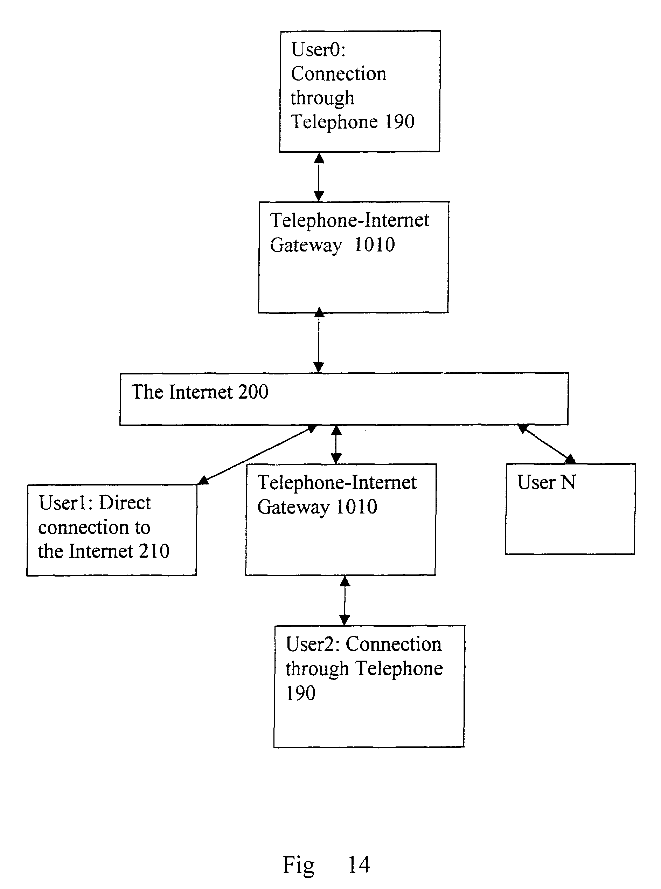

Reference is now made to Fig. 14 which is a simplified block diagram of apparatus for telephone-based Internet chat, constructed and operative in accordance with another preferred embodiment of the present invention.

A user (190) typically accesses the Internet (200) via a telephone Internet gateway (1010), which is illustrated in Fig. 7. The gateway (1010) connects to Internet chat "rooms", such as mIRC or ICQ, and chat from the user typically passes from the user, via the chat room, to other participants in the chat. The textual chat from such chat rooms is preferably converted to speech by the converter (50). The server (30) preferably returns the textual Internet chat to the user as speech via the telephone Internet gateway (1010).

It is appreciated that other participants (190), up to N participants, in the Internet chat may be connected to the chat rooms via a telephone Internet gateway (1010), a preferred embodiment of the present invention. Alternatively, participants may be connected via a personal computer in the prior art manner (210). If all the participants in the chat are utilizing a telephone connection, then the vocal chat preferably remains in an audio form and is not transferred to text.

If however, one of the participants in the Internet chat is connected via a computer, then the textual chat from that participant is converted to audio chat for distribution to telephone participants. Conversely the vocal chat of the telephone users is converted to textual chat for computer users. This speech to text conversion is typically performed by the voice recognition unit (55).

A "chat" is typically composed from rooms, each with different participants discussing different topics, and a user is preferably able to select which chat s/he wants to participate in. A sample "chat" session may be as follows:
"If you want to enter chat rooms please say "one"."
(User says "one".)
"You have a selection of two available chats: IRC and ICQ. Please say "one" for IRC, or "two" for ICQ"
(User says "one".)
"You have a selection of the following available rooms: business, fun, and professionals. Please say "one" for business, "two'' for fun or "three" for professionals. If you know a name that you want to talk with please say it and you will have a link with him/her"
(User says the name "John Smith.)
"Please talk to John"
(User starts to talk with John.)

An alternative preferred embodiment of the Internet chat is "Client chat" in which the user does not have to enter a chat room. The user defines in advance the participants with whom s/he would like to chat. When at least one of the predefined participant is on-line, i.e. logged onto the system, the user is preferably notified and the chat enabled.

It is appreciated that the software components of the present invention may, if desired, be implemented in ROM (read-only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

## Claims

1. Central apparatus for providing computerless surfing of an information network, the apparatus comprising:
a telephone connection allowing an individual caller from among a population of subscribers to make an incoming call to the central apparatus;
a menu selection acceptor operative to accept at least one menu selection from the individual caller;
a server connecting the incoming call to an information network and surfing the information network responsive to the caller's menu selections, and to access textual information of interest to the caller; and
a text-to-speech converter operative to convert the textual information of interest to the caller into speech output and to feed the speech output over the telephone connection to the individual caller.

2. Apparatus according to claim 1 wherein the information network comprises the Internet.

3. Apparatus according to claim 1 or claim 2 wherein the at least one menu selection comprises a hierarchy of menu/submenu selections.

4. Apparatus according to any of claims 1 - 3 wherein the menu selection acceptor is operative to accept an oral menu selection.

5. Apparatus according to any of claims 1 - 4 wherein the menu selection acceptor is operative to accept a keyed-in menu selection.

6. Apparatus according to any of claims 1 - 5 and also comprising a caller prompter operative to prompt the caller to present at least one menu selections which are understandable to the menu selection acceptor.

7. Apparatus according to claim 6 and also comprising a caller learning system operative to save at least one menu selection presented by a user and wherein the caller prompter is operative to present a query to the caller offering to access at least one saved menu selection and to surf the information network based on said saved menu selection.

8. Apparatus according to any of claims 1 - 7 and also comprising a text format analyzer operative to perform a generally contentless analysis of the text format of the textual information of interest, to identify meaningful portions within the textual information of interest and relationships therebetween, to generate a string of speech which represents said meaningful portions within the textual information of interest and said relationships therebetween and to feed the string of speech to the text to speech converter.

9. Apparatus according to claim 8 wherein the meaningful portions and relationships therebetween are represented in said textual information using a menu/submenu structure.

10. Apparatus according to any of claims 1 - 9 wherein the information network comprises a Teletext network.

11. Apparatus according to any of claims 1 - 10 wherein the text to speech converter is operative to convert textual information to speech output at a user-selected speed, from among a plurality of conversion speeds, according to a user's preferences.

12. Apparatus according to any of claims 1 - 11 wherein the text to speech converter is operative to receive from a caller an indication of the caller's preference of at least one characteristic of the speech output of the converted text, and is operative to alter said at least one characteristic of said speech output to said caller according to said caller's preference.

13. Apparatus according to claim 12 wherein said at least one characteristic comprises the speed of the speech output.

14. Apparatus according to claim 8 wherein the text to speech converter is operative to receive formatting information regarding specific formatting of the textual information from the text format analyzer, and is operative to change at least one characteristic of said speech output according to said formatting information.

15. Apparatus according to claim 14 wherein said at least one characteristic of said speech output comprises the tone of the speech output.

16. Central apparatus for providing computerless surfing of an information network, the apparatus comprising:
a telephone connection allowing an individual caller from among a population of computerless subscribers to make an incoming call to the central apparatus;
a menu selection acceptor operative to accept a menu selection from the individual caller; and
a server connecting the incoming call to an information network and surfing the information network responsive to the caller's menu selections, and to access information of interest to the caller, and to feed the information onto the telephone connection.

17. Apparatus according to claim 16 wherein the information network comprises the Internet.

18. A method for computerless surfing of an information network, the method comprising:
accepting a menu selection from an individual caller, via a telephone connection allowing a caller from among a population of computerless subscribers to make an incoming call to a central apparatus;
connecting the individual caller's incoming call to an information network and surfing the information network responsive to the caller's menu selections, and to access information of interest to the caller; and
converting the textual information of interest to the caller into speech output and feeding the speech output over the telephone connection to the individual caller.

19. A method according to claim 18 wherein the information network comprises the Internet.

20. A method for computerless surfing of an information network, the method comprising:
accepting a menu selection from an individual caller, via a telephone connection allowing a caller from among a population of computerless subscribers to make an incoming call to a central apparatus;
connecting the individual caller's incoming call to an information network and surfing the information network responsive to the caller's menu selections, and to access information of interest to the caller; and
feeding the information onto the telephone connection.

21. A method according to claim 20 wherein the information network comprises the Internet.

22. Central apparatus, operative in conjunction with a navigation device, a telephone network, and a vehicle, for providing computerless surfing of an information network, the apparatus comprising:
a navigation device, at least partially mounted in the vehicle, operative to provide information regarding the present specific localization of the vehicle, to the central apparatus, via a telephone connection;
a telephone connection, mounted in the vehicle, operative to transfer information regarding the present specific localization of the vehicle, from the navigation device to the central apparatus;
an acceptor operative to accept said information from the navigation device via the telephone connection;
a server operative to connect to the information network and to surf the information network responsive to the specific localization information, and to access textual information relevant to the specific localization of the vehicle; and
a text-to-speech converter operative to convert the textual information into speech output, and to feed the speech output over the telephone connection to an individual caller, in said vehicle.

23. Apparatus according to claim 22 wherein a caller in the vehicle provides information regarding a travel vector of said vehicle, via the telephone connection, to the server, and wherein the server is operative to combine information regarding the present specific localization of the vehicle, and said travel vector, to anticipate a future location of the vehicle, and to surf the information network for textual information relevant to the anticipated future location of the vehicle.

24. Apparatus according to claim 22 or claim 23 wherein the information network comprises the Internet.

25. Central apparatus, for use in conjunction with a telephone network, for providing computerless Internet "chat", the apparatus comprising:
a telephone connection allowing an individual caller from among a population of subscribers to make an incoming call to the central apparatus;
a menu selection acceptor operative to accept a menu selection from the individual caller;
a server connecting the incoming call to the Internet, and surfing the Internet responsive to the caller's menu selections, and to access an Internet chat "room" comprising textual chat from at least one contributor;
a speech-to-text converter operative to convert the caller's speech into textual chat, and to feed the textual chat to the Internet chat room, wherefrom the textual chat can be accessed by each of the at least one contributors; and
a text-to-speech converter operative to convert textual chat into speech output and to feed the speech output over the telephone connection to the individual caller.

26. Apparatus according to claim 25 wherein the text-to-speech converter is operative to modify the speech output of the converted textual chat such that the speech output converted from the textual chat from each of said at least one contributors to the textual chat room can be differentiated by the caller.

27. A method, operative in conjunction with a navigation device, a telephone network, and a vehicle, for computerless surfing of an information network, the method comprising:
providing information regarding the present specific localization of the vehicle, from the navigation device, at least partially mounted in the vehicle, to a central apparatus, via a telephone connection;
accepting information regarding the present specific localization of the vehicle, from said navigation device, via a telephone connection to a central apparatus;
connecting the incoming localization information to an information network;
surfing the information network, responsive to the specific localization information to access textual information relevant to the specific localization of the vehicle;
converting the textual information of relevance to the specific localization into speech output; and
feeding said speech output over a telephone connection to an individual caller in said vehicle.

28. A method according to claim 27 wherein the information network comprises the Internet.

29. A method according to claim 27, and also comprising:
a caller in the vehicle providing information regarding a travel vector of said vehicle, via the telephone connection, to the server;
combining the information regarding the present specific localization of the vehicle, and said travel vector, to anticipate a future location of the vehicle; and
surfing the information network for textual information relevant to the anticipated future location of the vehicle.

30. A method according to claim 29 wherein the information network comprises the Internet.

31. A method, for use in conjunction with a telephone connection, for computerless Internet chat, the method comprising:
accepting a menu selection from an individual caller, via the telephone connection allowing a caller from among a population of subscribers to make an incoming call to a central apparatus;
connecting the individual caller's incoming call to the Internet and surfing the Internet responsive to the caller's menu selections, and to access an Internet chat "room" comprising textual chat from at least one contributor;
converting the textual chat into speech output and feeding the speech output over the telephone connection to the individual caller; and
converting the caller's speech into textual chat, and feeding the textual chat to the Internet chat room, wherefrom the textual chat can be accessed by each of the at least one contributors.

32. A method according to claim 31, and also comprising:
modifying the speech output of the converted textual chat such that the speech output converted from the textual chat from each of said at least one contributors to the chat room can be differentiated by the caller.

33. Central apparatus for providing computerless surfing of radio channels, the apparatus comprising:
a telephone connection allowing an individual caller from among a population of subscribers to make an incoming call to the central apparatus; and
a server comprising:
a menu selection acceptor operative to receive the incoming call over the telephone connection, and to accept at least one menu selection from the individual caller;
a sound card operative to convert radio signals into audio files; and
wherein the server is operative to store the audio files converted from radio the signals, to access the audio files of interest to the caller, and to feed the audio files as speech output over the telephone connection to the individual caller.

34. Apparatus according to claim 33 wherein the at least one menu selection comprises the selection of at least one characteristic relating to the broadcasting of the radio signals.

35. Apparatus according to claim 34 wherein the at least one characteristic comprises at least one of the time of broadcast of the radio signals, and the radio frequency of the radio signals.

36. Apparatus according to any of claims 33 - 35 wherein the at least one menu selection comprises the selection of at least one characteristic relating to the content of the radio signals.

37. Apparatus according to claim 36 wherein the at least one characteristic comprises at least one of the title of a specific radio program, and the subject of a specific radio program.

38. A method for computerless surfing of radio channels, the method comprising:
converting radio signals into audio files and storing the audio files on a server;
accepting at least one menu selection from an individual caller, via a telephone connection allowing a caller from among a population of computerless subscribers to make an incoming call to a central apparatus;
accessing the audio files of interest to the caller; and
feeding the audio files as speech output over the telephone connection to the individual caller.

39. A method according to claim 38 wherein the at least one menu selection comprises the selection of at least one characteristic relating to the broadcasting of the radio signals.

40. A method according to claim 39 wherein the at least one characteristic comprises at least one of the time of broadcast of the radio signals, and the radio frequency of the radio signals.

41. A method according to any of claims 38 - 40 wherein the at least one menu selection comprises the selection of at least one characteristic relating to the content of the radio signals.

42. A method according to claim 41 wherein the at least one characteristic comprises at least one of the title of a specific radio program, and the subject of a specific radio program.
